Europäisches Patentamt

European Patent Office

Office européen des brevets

(19)

(11) Veröffentlichungsnummer: **0 110 146**
**B1**

(12)

# EUROPÄISCHE PATENTSCHRIFT

(45) Veröffentlichungstag der Patentschrift:
28.12.88

(51) Int. Cl.⁴: **G 01 B 11/00,** G 01 B 11/26

(21) Anmeldenummer: **83110759.4**

(22) Anmeldetag: **27.10.83**

(54) **Optisches Sensorsystem zur Teilelagebestimmung.**

(30) Priorität: **03.11.82 DE 3240596**

(43) Veröffentlichungstag der Anmeldung:
**13.06.84 Patentblatt 84/24**

(45) Bekanntmachung des Hinweises auf die Patenterteilung:
**28.12.88 Patentblatt 88/52**

(84) Benannte Vertragsstaaten:
**DE FR GB IT SE**

(56) Entgegenhaltungen:
**DE-A- 2 617 797**
**US-A- 4 147 930**

(73) Patentinhaber: **Siemens Aktiengesellschaft Berlin und München, Wittelsbacherplatz 2, D-8000 München 2 (DE)**

(72) Erfinder: **Niedermayr, Erich, Dipl.-Ing.,
Konrad-Peutinger-Strasse 15, D-8000 München 70 (DE)**
Erfinder: **Poleschinski, Richard, Dipl.-Ing.,
Werdenfelsstrasse 29, D-8000 München 70 (DE)**

## Beschreibung

Die Erfindung betrifft ein Verfahren nach dem Oberbegriff des Anspruchs 1.

Beim Einsatz von Industrierobotern muss zum Greifen eines Teiles dessen genaue Lage und Orientierung bekannt sein. Um verschiedene Bauteile zuzuführen, verwendet man entweder teilespezifische Zubringeeinrichtungen (Rüttelförderer, Förderbänder mit Teileträger und so weiter), die die zu greifenden Teile in exakter Lage und Orientierung anbieten oder aufwendige Bildverarbeitungssysteme, die Teilelage und Orientierung errechnen und der Robotersteuerung übermitteln. Die erstgenannte Möglichkeit ist jedoch nur für eine Teileart geeignet, bei mehreren verschiedenen Teilen wird zudem auch diese Methode wirtschaftlich aufwendig. Gerade eine effiziente Montage mit Industrierobotern erfordert aber eine flexible Bauteilezuführung (kleine Losgrössen – grosse Typenvielfalt).

Aus der US-A-4 147 930 ist ein Verfahren zur optischen Teilelagebestimmung von Teilen bekannt, in dem diese Teile relativ zu einem Aufnahmekopf bewegt werden. Eine Ausführungsform dieses Verfahrens setzt den Einsatz reflektierten Lichts voraus, wie es auch aus dem Verfahren nach der DE-A-2 617 797 bekannt ist.

In der DE-A-2 617 797 wird eine Vorrichtung zur optischen Messung der Position und der Bewegung eines Objektes beschrieben und dargestellt. Dabei wird ein relativ zu einem Aufnahmekopf bewegtes Teil durch einen Schlitz beleuchtet und das an der Teileoberfläche reflektierte Licht auf einen Detektor abgebildet.

Der Erfindung liegt die Aufgabe zugrunde, ein Verfahren zur optischen Teilelagebestimmung von Teilen zu entwickeln, um zum Beispiel beim Einsatz von Industrierobotern die zum Greifen eines Teiles erforderlichen genauen Daten über Lage und Orientierung liefern zu können.

Diese Aufgabe wird gemäss dem Kennzeichen des Anspruchs 1 gelöst.

Mit dem Verfahren nach der Erfindung ist man in der Lage, die Teile erst nach der Grösse der von oben sichtbaren Teilefläche zu bestimmen, falls dieses Kriterium allein für eine Unterscheidung ausreichend ist. Dieses Verfahren hat den Vorteil, dass die für den Greifvorgang charakteristischen Erkennungsmerkmale einer bestimmten Höhenebene mittels der vor der Fotodiodenzeile angebrachten Schlitzmaske für die Auswertung herangezogen werden, während die für die Auswertung nicht wesentlichen Flächen, zum Beispiel der Hintergrund, ausgeblendet werden. Die beschriebene Erfindung bietet die Möglichkeit, ein kompaktes, störunempfindliches und kostengünstiges Sensorsystem zu bauen, das die schnelle Ermittlung von Teilelage und Orientierung ermöglicht. Der Teileschwerpunkt bildet ein teileunabhängiges Merkmal, aus dem durch einfache Addition von x- und y-Werten der Greifpunkt gewonnen werden kann.

Im physikalischen Sinn ist die Fläche $F = \iint dxdy$, das Flächenmoment bezüglich der Ordinate $M_y = \iint xdxdy$ und bezüglich des Abszisses $M_x = \iint ydxdy$.

Mit dem Verfahren nach der Erfindung ist es möglich, die Ermittlung der Teilelage in Echtzeit, das heisst nahezu ohne Verzögerungszeit, durchzuführen.

Wählt man n-Einzeldioden und konstante Relativgeschwindigkeit, dann ergibt sich für das Flächenmoment bezüglich der Ordinate

$$M_x = \int \left( \sum_n y_n \cdot g_n \right) dt,$$

wobei $g_n$ der Beleuchtungsanteil der n-Einzeldioden ist.

Zur Aufnahme der Abszisse, längs der die Bewegung erfolgt, bestehen zwei Möglichkeiten. Nach Start der Auswertung können die Summenwerte der Diodenströme in bestimmten Zeitabständen ab einem willkürlichen Startsignal mit einem laufenden Zähler multipliziert und aufaddiert werden. Das ist eine besonders einfache Möglichkeit, die x-Komponente zu erfassen.

Eine weitere Möglichkeit zur Aufnahme der x-Komponente besteht nach der Erfindung darin, dass die Summenwerte der Diodenströme kontinuierlich mit einem der Abtastzeit proportionalen Spannungswert multipliziert werden.

Der Einsatz eines analogen Multiplizierers, wobei der mitlaufende Zähler durch eine Sägezahnspannung (x (t)) ersetzt wird, bietet verschiedene Vorteile, wie zum Beispiel Echtzeitverarbeitung und hohe Auflösung in x-Richtung. Daneben kann diese Methode auch für Fälle eingesetzt werden, wo die Verfahrgeschwindigkeit nicht konstant ist. Hier kann durch Integration eines geschwindigkeitsproportionalen Signals die Spannung (x (t) extern gewonnen werden.

Die Orientierung des Teiles kann durch Berechnung der Lage der Trägheitsellipse gewonnen werden. In diesem Sinne können nach einer weiteren Ausgestaltung der Erfindung durch weitere Summation und Gewichtung der ermittelten Werte die Flächenträgheitsmomente festgestellt werden.

Nach einer weiteren Ausgestaltung der Erfindung kann aus den Flächenmomenten und den Flächenträgheitsmomenten mit Hilfe eines digitalen Rechners der Teileschwerpunkt und die Orientierung eines Teiles gewonnen werden. Mit dem Rechner kann die endgültige Division der analog ermittelten Werte zur Bestimmung der Positionskoordinaten $x_s$ und $y_s$ sowie des Drehwinkels $\alpha$ und die Bereitstellung dieser Werte für einen Industrieroboter erfolgen.

Die Erfindung wird anhand der Figuren erläutert. Es zeigen:

Figur 1 eine Prinzipdarstellung eines Aufnahmekopfes,

Figur 2 die Drausicht auf ein Teil dessen Lage mit der Schwerpunktsberechnung bestimmt wird,

Figur 3 eine weitere Draufsicht mit der Trägheitsellipse und

Figur 4 eine Schaltungsanordnung für die Auswertung.

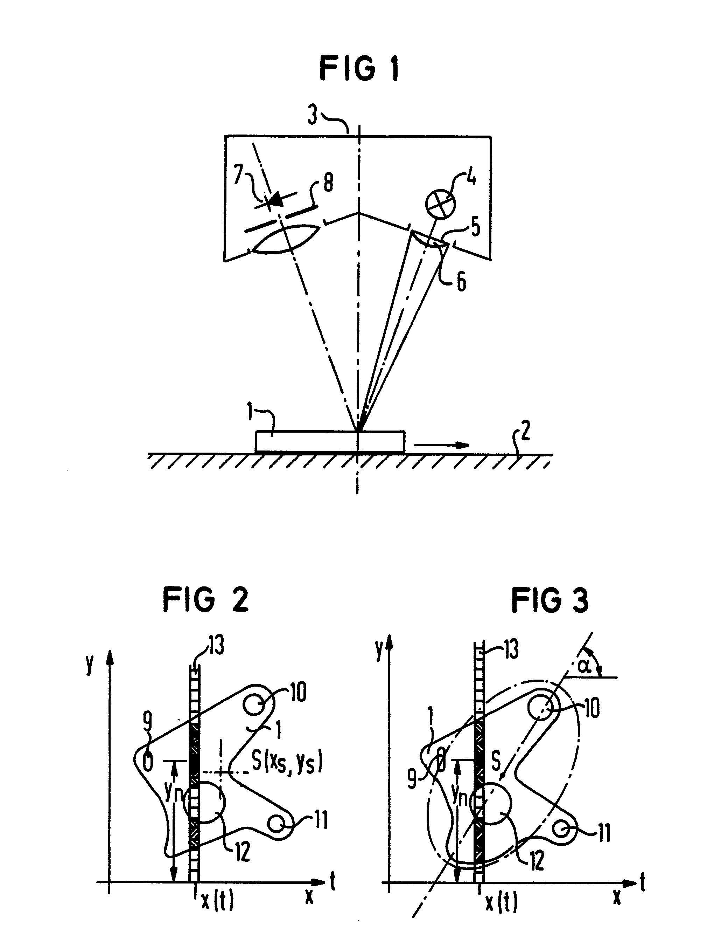

In den Figuren ist ein Teil, dessen Lage bestimmt werden soll, mit 1 bezeichnet. Nach der Darstellung in der Figur 1 wird dieses Teil auf einem Fördermittel 2 mit konstanter Geschwindigkeit unter einem Aufnahmekopf 3 vorbeibewegt. Von einer Lichtquelle 4 wird das Objekt durch einen Schlitz 5 beleuchtet, vor dem zum Beispiel eine Zylinderlinse 6 angeordnet ist. Das reflektierte Licht wird durch eine Fotodiodenzeile 7 aufgenommen, vor der sich eine Schlitzblende 8 befindet.

Ein Teil, dessen Lage bestimmt werden soll, ist in den Figuren 2 und 3 abgebildet. Ein Ausschnitt der Diodenzeile 7 mit n-Einzeldioden ist mit 13 bezeichnet. Ausserdem ist in den Figuren 2 und 3 der Schwerpunkt S markiert. Die schraffierten Kästchen bezeichnen die Einzeldioden auf die von der Oberfläche des Teiles reflektiertes Licht fällt. Für eine der Dioden ist die Position durch die Angabe des y-Wertes $y_n$ und x (t) angegeben. Der Drehwinkel ist mit $\alpha$ bezeichnet.

Für die Auswertung macht sich die Erfindung die physikalischen Gesetze über Flächenschwerpunktsbestimmung zunutze. Demnach ist

$$x_s = \frac{\iint x\,dxdy}{\iint dxdy}$$

$$y_s = \frac{\iint y\,dxdy}{\iint dxdy}$$

Bei den folgenden Betrachtungen wird der Beleuchtungsanteil der Einzeldioden mit $g_n$ bezeichnet, der proportional der Länge dy ist. Für die nachfolgende Auswertung ist Voraussetzung, dass das Teil mit konstanter Geschwindigkeit v gegenüber dem Aufnahmekopf bewegt wird.

Unter diesen Voraussetzungen ergeben sich für den Schwerpunkt folgende Koordinaten:

$$x_s = \frac{\int x(t) \cdot (\sum_n g_n)\, dt}{F}$$

$$y_s = \frac{\int (\sum_n \cdot g_n)\, dt}{F} \qquad F = \int (\sum_n g_n)\, dt$$

Die Flächenmomente sind mit $M_x$ und $M_y$ bezeichnet.

$$M_y = \int x\,(t) \cdot (\sum_n g_n)\, dt; \quad M_x = \int (\sum_n y_n \cdot g_n)\, dt$$

In der Figur 3 ist eine Erweiterung dargestellt, mit der auch die Drehlage des zu bestimmenden Teiles berechnet werden kann. Aus der Mechanik ergibt sich für die Orientierung der Trägheitsellipse

$$\tan 2\alpha = \frac{2J_{xy}}{J_y - J_x}$$

mit

$$J_{xy} = \iint x \cdot y\, dxdy \dots \text{Fliehmoment}$$

$$J_x = \iint y^2\, dxdy \dots \text{Trägheitsmoment x-Achse}$$

$$J_y = \iint x^2\, dxdy \dots \text{Trägheitsmoment y-Achse}$$

Aufgrund der eingangs beschriebenen Randbedingungen ergibt sich

$$J_{xy} = \int x(t) \cdot (\sum_n y_n \cdot g_n)\, dt$$

$$J_y = \int x^2(t) \cdot (\sum_n g_n)\, dt$$

$$J_x = \int (\sum_n y_n^2 \cdot g_n)\, dt$$

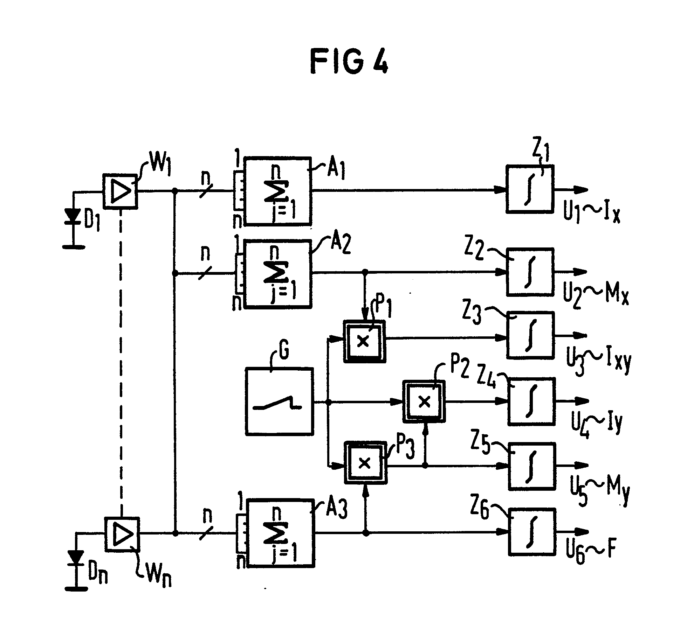

Ein Blockschaltbild zur Auswertung der Diodenströme zeigt die Figur 4. An jede Diode D1 ... Dn ist ein Stromspannungswandler W1 ... Wn angeschlossen. Darauf folgen drei Summierglieder $A_1$–$A_3$, durch die die Diodenströme besonders gewichtet aufaddiert werden. Bei dem Summierglied $A_3$ ergibt sich eine Ausgangsspannung $\sum_{j=1}^{n} k_j \cdot U_j$ mit $k_j$ = konstant. Bei dem Summierglied $A_2$ gilt die gleiche Beziehung für die Ausgangsspannung aber für $k_j \sim j$. Für das Summierglied $A_1$ gilt die gleiche Beziehung für die Ausgangsspannung für $k_j \sim j^2$.

Für die weitere Auswertung wird ein Sägezahngenerator G eingeführt, an den sich Multiplikationsglieder $P_1$–$P_3$ anschliessen. Darauf folgen Integratoren $Z_1$–$Z_6$ zur abschliessenden Berechnung der erforderlichen Spannungswerte $U_1$–$U_6$:

$U_1 \sim I_x$ = Flächenträgheitsmoment
$U_2 \sim M_x$ = Flächenmoment
$U_3 \sim I_{xy}$ = Flächenmoment
$U_4 \sim I_y$ = Flächenträgheitsmoment
$U_5 \sim M_y$ = Flächenmoment und
$U_6 \sim F$ = Fläche.

Ein grosser Teil der Schaltung kann in Analogtechnik (Summationsverstärker mit unterschiedlichen Verstärkungsfaktoren, Multiplizierer, Integratoren und so weiter) aufgebaut werden, um eine rasche und genaue Auswertung zu gewährleisten. Zudem kann dieser Schaltungsteil leicht auf einem Baustein integriert werden. Die direkte Berechnung und Ausgabe der Schwerpunktskoordinaten und der Orientierung erfolgt vorzugsweise mit einem Standard-Mikroprozessorsystem.

**Patentansprüche**

1. Verfahren zur optischen Teilelagebestimmung von Teilen, die relativ zu einem Aufnahmekopf (3) bewegt werden, wobei das bewegte Teil (1) durch einen Schlitz (5) des Aufnahmekopfes beleuchtet und das an der Teileoberfläche reflektierte Licht durch eine Fotodiodenzeile (7) aufgenommen wird, vor der eine Schlitzblende (8) angeordnet ist, dadurch gekennzeichnet, dass durch parallele Auswertung der Diodenströme über eine Auswerteschaltung die Teilelage und Orientierung ermittelt wird und dass durch Summierung und Gewichtung der einzelnen Diodenströme die Fläche F und die Flächenmomente $M_x$, $M_y$ des Teiles (1) zur Festlegung des Teileschwerpunktes S ermittelt werden.

2. Verfahren nach Anspruch 1, dadurch gekennzeichnet, dass die Summenwerte der Diodenströme in bestimmten Zeitabständen ab einem willkürlichen Startsignal mit einem laufenden Zähler multipliziert und aufaddiert werden.

3. Verfahren nach Anspruch 1, dadurch gekennzeichnet, dass die Summenwerte der Diodenströme kontinuierlich mit einem der Abtastzeit proportionalen Spannungswert G multipliziert werden.

4. Verfahren nach Anspruch 1 bis 3, dadurch gekennzeichnet, dass durch weitere Summation und Gewichtung der ermittelten Werte die Flächenträgheitsmomente $I_x$, $I_y$ und $I_{xy}$ festgestellt werden.

5. Verfahren nach den Ansprüchen 1 und 4, dadurch gekennzeichnet, dass aus den Flächenmomenten und den Flächenträgheitsmomenten mit Hilfe eines digitalen Rechners der Teileschwerpunkt S und die Orientierung eines Teiles gewonnen werden.

## Claims

1. A method of optically determining the position of components which are moved in relation to a recording head (3), where the moving component (1) is illuminated through a slot (5) in the recording head, and the light reflected back from the surface of said component is recorded by a row of photodiodes (7) arranged behind a slotted diaphragm (8), characterised in that the position and orientation of the component is determined by a parallel analysis of the diode currents via an analysis circuit, and that, that by the addition and weighting of the individual diode currents, the surface area (F) and the surface moments $M_x$, $M_y$ of the component (1) are determined in order to specify the centre of gravity (S) of the component.

2. A method as claimed in Claim 1, characterised in that the sum values of the diode currents are multiplied and added by a running counter at specified time intervals from an arbitrary start signal.

3. A method as claimed in Claim 1, characterised in that the sum values of the diode currents are continuously multiplied by a voltage value (G) which is proportional to the scanning time.

4. A method as claimed in Claim 1 to 3, characterised in that by further addition and weighting of the established values, the surface inertia moments $I_x$, $I_y$ and $I_{xy}$ are determined.

5. A method as claimed in Claims 1 and 4, characterised in that centre of gravity (S) of a component, and the orientation of a component, are obtained from the surface moments and the surface inertia moments by means of a digital computer.

## Revendications

1. Procédé pour déterminer optiquement la position de pièces qui se déplacent par rapport à une tête de détection (3), et selon lequel la pièce déplacée (1) est éclairée à travers une fente (5) de la tête d'enregistrement et la lumière réfléchie sur la surface de la pièce est reçue par une rangée (7) de photodiodes, devant laquelle est disposé un diaphragme à fente (8), caractérisé par le fait que la position et l'orientation de la pièce sont déterminées au moyen d'une évaluation des courants des diodes effectuée par l'intermédiaire d'un circuit d'évaluation et que la surface F et les moments géométriques $M_x$, $M_y$ de la pièce (1) servant à déterminer le barycentre S de la pièce sont déterminés par sommation et pondération des différents courants des diodes.

2. Procédé suivant la revendication 1, caractérisé par le fait que les valeurs sommes des courants des diodes sont multipliées à des intervalles de temps déterminés, à partir d'un signal de départ arbitraire, par un multiplicateur courant et sont additionnées.

3. Procédé selon la revendication 1, caractérisé par le fait que les valeurs sommes des courants des diodes sont multipliées de façon continue par une valeur de tension G proportionnelle à la durée d'échantillonnage.

4. Procédé suivant la revendication 1 à 3, caractérisé par le fait que les moments d'inertie géométriques $I_x$, $I_y$ et $I_{xy}$ sont déterminés au moyen d'une sommation supplémentaire et d'une pondération supplémentaire des valeurs déterminées.

5. Procédé suivant les revendications 1 et 4, caractérisé par le fait que le barycentre S et l'orientation d'une pièce sont déterminés à partir des moments géométriques et des moments d'inertie géométriques à l'aide d'un calculateur numérique.

# FIG 1

# FIG 2

# FIG 3

# FIG 4